# EUROPEAN PATENT APPLICATION

(11) **EP 1 316 416 A1**
(43) Date of publication of application: **04.06.2003**
(21) Application number: 02380227.5
(22) Date of filing: 31.10.2002
(51) Int. Cl.: B32B 17/10, C03C 27/12, B44F 1/06, B44C 5/04

(54) **Solar attenuation multilayered glass plate**

(30) Priority: 28.11.2001 ES 200102883
(71) Applicant: CRISTALES CURVADOS S.A., E-08400 Granollers, Barcelona (ES)
(72) Inventor: Figuerola Gili, Fernando, 08400 Granollers (Barcelona) (ES)
(74) Representative: Esteban Perez-Serrano, Maria Isabel

(57) **Abstract**

The invention consists of a multilayered glass plate with an intermediate sheet (3) having a serigraphy with an opaque design that acts as a solar attenuator, consisting of superimposing two glass sheets (1) and an additional intermediate polyester sheet (3) joined to each other by a transparent adhesive (2).

## Description

### OBJECT OF THE INVENTION

The present invention relates to an multilayered glass plate in which the intermediate sheet includes a serigraphy with a special pattern that allows attenuating sunlight while allowing to see through it.

This multilayered glass plate consists of two glass sheets and an intermediate sheet of serigraphed polyester.

A suitable election of the printed image allows an attenuation of sunlight resulting in a diffuse light, applicable for example for compartmentalising office spaces.

### BACKGROUND OF THE INVENTION

Glass plates are known that incorporate on their inner face a sheet acting as a solar filter.

In these glass plates the sheet is protected from the elements as it is attached to its inner face; in addition, it allows sunlight to pass filtering the rays, admitting only frequencies in the range allowed by the filter sheet.

Also known are multilayer glass plates meant for use in vehicles.

Glass plates of this type incorporate an intermediate plastic layer that, in the event of an impact, prevents the glass from shattering and being launched towards the driver.

It is important in this type of glasses that the plastic sheet be invisible and allows light to pass, to obtain the greatest possible visibility.

In the present invention a specific layered configuration is established in which a serigraphed polyester sheet is placed between the outer glass plates to prevent passage of sunlight to a certain extent.

### DESCRIPTION OF THE INVENTION

The invention object of this memory relates to an multilayered glass for attenuating sunlight passing through it.

In addition to this function as the attenuation is not obtained by a filter but by interposing an image with a regular pattern of opaque areas, the effect obtained is one of a diffuse light on the inside of the area compartmentalised by the glass plate.

The serigraphed image is shown in different colours on either side of the sheet, such as black and white, providing different atmospheres.

It is important that the colour of the inner face is dark in order to obtain an optically transparent effect, and a bright colour on the outside to provide an opaque effect.

On this image scheme formed of small opaque areas it is possible to define lines by eliminating part of these opaque areas, such as in regular patterns, conforming aesthetic patterns without greatly reducing the attenuation of sunlight.

The inner structure of this plate is symmetrical with respect to its centre plane and consists of two glass plates between which is an additional plastic sheet, serigraphed, between two layers of butyral or any equivalent adhesive that joins the polyester layer to the two glass plates.

The layers of butyral protect the polyester from direct contact with the glass sheets, and as the printed image is on the polyester the latter shows a higher definition than when printed directly on the glass surface.

Application of this type of multilayer glass plates with solar attenuation is extensive, as by combining different thickness and patterns it is possible to use them in office partitions, façades, shop windows, lamps, doors or even floors.

### DESCRIPTION OF THE DRAWINGS

The present description is accompanied by a set of drawings for purposes of illustration of a preferred embodiment, and not limiting the invention.

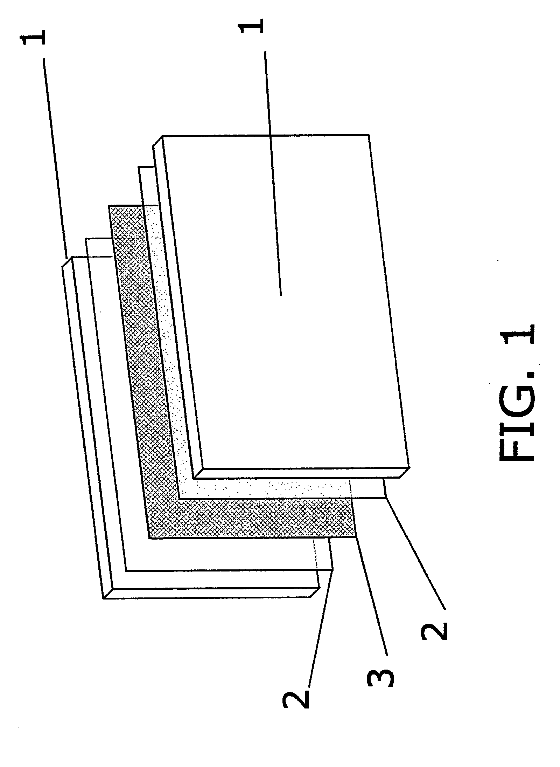

Figure 1 is a schematic exploded view of the layers forming the multilayer plate.

Figure 2 is a specific embodiment of the pattern used in the serigraphy of the polyester sheet.

### PREFERRED EMBODIMENT OF THE INVENTION

In view of the above, the present invention consists of an multilayered glass for solar attenuation.

This invention consists of two outer glass sheets (1) between which is placed a plastic sheet (3) attached by an adhesive such as butyral (2).

The intermediate polyester sheet (3) is serigraphed and defines the pattern according to a certain design.

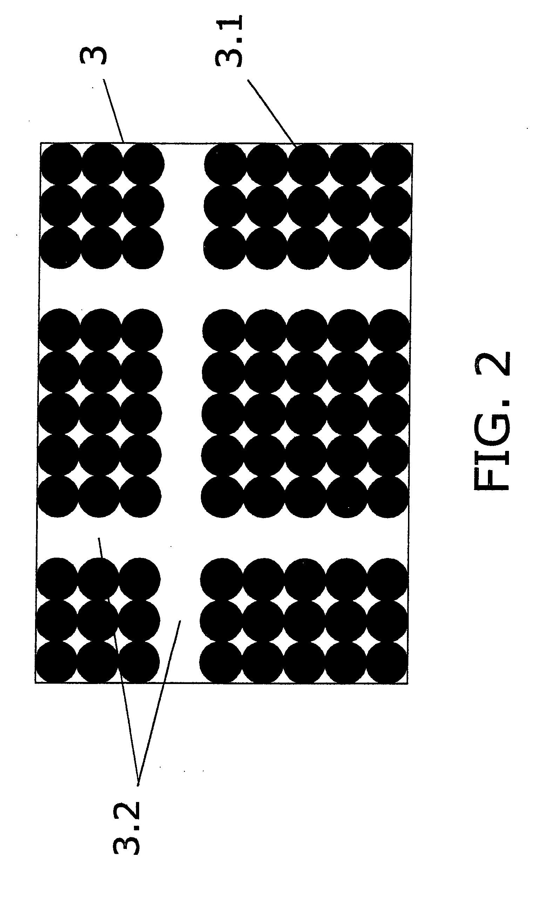

Figure 2 shows the serigraphed polyester sheet (3) with an expanded pattern consisting of repeated opaque motifs (3.1) that together define a certain design.

The example used in figure 2 consists of circular forms, although diamond shapes or others can be used that must not necessarily touch each other.

The relationship between the opaque area and the area that is not covered defines the extent of solar attenuation.

The figure 2 also shows deleted vertical and horizontal alignments (3.2) of the opaque circular designs (3.1) that at a distance resemble lines that can configure patterns with decorative purposes.

In this embodiment of the invention the colour of one side of the printed image is black and the other side is white, although any pair of contrasting dark and light colours could be used.

The essence of this invention is not affected by variations in the materials, size, shape or arrangement of the component elements, described in a non-limiting manner so that an expert in the field should be able to reproduce it.

## Claims

1. Multilayered glass plate for solar attenuation, from among glass plates meant to limit the passage of sunlight and among glass plates consisting of several superimposed sheets, **characterised in that** it consists of two glass plates (1) between which is placed an additional polyester sheet joined to the former by a transparent adhesive (2), preferably butyrals; the inner polyester sheet (3) is serigraphed with an opaque solar attenuation pattern repeated in every direction.

2. Multilayered glass plate for solar attenuation, according to claim 1, **characterised in that** on the pattern of the serigraphy printed on the polyester sheet (3) are defined additional opaque or transparent lines by eliminating or adding opaque areas in order to determine decorative designs.

3. Multilayered glass plate for solar attenuation, according to claim 1 and/or 2, **characterised in that** the two sides of the serigraphed polyester sheet (3) have different colours, one being dark and the other light.
